# EUROPÄISCHE PATENTSCHRIFT

(11) **EP 4 613 154 B1**
(45) Veröffentlichungstag und Bekanntmachung des Hinweises auf die Patenterteilung: **25.11.2026**
(21) Anmeldenummer: 25159195.4
(22) Anmeldetag: 20.02.2025
(51) Int. Cl.: A47J 31/42, A47J 31/52

(54) **VERFAHREN ZUM BETREIBEN EINER KAFFEEMASCHINE**
METHOD FOR OPERATING A COFFEE MACHINE
PROCÉDÉ DE FONCTIONNEMENT D'UNE MACHINE À CAFÉ

(30) Priorität: 08.03.2024 DE 102024202224
(43) Veröffentlichungstag der Anmeldung: 10.09.2025
(73) Patentinhaber: BSH Hausgeräte GmbH, 81739 München (DE)
(72) Erfinder: Schreiner, Thomas, 84544 Aschau am Inn (DE); Hacker, Robert, 83349 Palling (DE)

(56) Entgegenhaltungen:
- EP-A1- 3 381 336
- EP-B1- 2 117 393
- DE-A1- 102020 119 530

## Beschreibung

Die vorliegende Erfindung betrifft ein Verfahren zum Betreiben einer Kaffeemaschine. Die Erfindung betrifft ferner ein zum Ausführen dieses Verfahrens ausgestaltetes Computerprogrammprodukt sowie eine Kaffeemaschine, die zur Durchführung dieses Verfahrens eingerichtet bzw. programmiert ist.

Ein Verfahren zur Ansteuerung einer Kaffeemaschine ist z.B. aus der EP 3 381 336 A1, der DE 10 2020 119530 A1 und der EP 2 117 393 B1 bekannt.

Eine moderne Kaffeemaschine, insbesondere ein Kaffeevollautomat, erlaubt dem Benutzer üblicherweise eine individuelle Einstellung von den Zubereitungsvorgang von Kaffeeheißgetränken beeinflussenden Zubereitungsparametern. Dabei ist es dem Benutzer aber oftmals nicht ersichtlich, wie sich die Einstellung bestimmter Zubereitungsparameter auf Geräuschentwicklung, Geschwindigkeit sowie Energie- und Ressourcenverbrauch des Zubereitungsvorgangs sowie auf die Qualität des zubereiteten Kaffeeheißgetränks auswirkt, obwohl es sich hierbei für den Benutzer oftmals um entscheidungsrelevante Kenngrößen handelt.

Es ist daher eine Aufgabe der vorliegenden Erfindung, ein verbessertes Betriebsverfahren für eine Kaffeemaschine zu schaffen, in welchem voranstehend erläuterter Nachteil zumindest teilweise, vorzugsweise sogar vollständig, ausgeräumt ist.

Diese Aufgabe wird erfindungsgemäß durch den Gegenstand der unabhängigen Patentansprüche gelöst. Vorteilhafte Ausführungsformen sind Gegenstand der abhängigen Ansprüche.

Grundidee der Erfindung ist demnach, in einer Kaffeemaschine wenigstens drei verschiedene, vom Benutzer der Kaffeemaschine auswählbare Betriebsmodi - einen ersten, zweiten und dritten Betriebsmodus - festzulegen, wobei in einem ersten Betriebsmodus Komponenten der Kaffeemaschine so angesteuert werden, dass der Zubereitungsvorgang reduzierter Geräuschentwicklung erfolgt. Im zweiten Betriebsmodus werden Komponenten der Kaffeemaschine so angesteuert, dass der Zubereitungsvorgang mit reduzierter Zubereitungsdauer erfolgt. Das Kaffeeheißgetränk wird also im zweiten Betriebsmodus schneller zubereitet als im ersten und dritten Betriebsmodus. Im dritten Betriebsmodus werden die Komponenten der Kaffeemaschine während des Zubereitungsvorgangs besonders ressourcen- und energiesparend betrieben. Beim erfindungsgemäßen Verfahren kann die Kaffeemaschine zwischen den Betriebsmodi umgeschaltet werden, d.h. er kann für die Zubereitung eines Kaffeeheißgetränks den gewünschten Betriebsmodus auswählen. Der Benutzer ist somit nicht mehr gezwungen, einzelne Zubereitungsparameter einzustellen, um eine besonders geräuscharme, besonders schnelle oder besonders energiesparende Zubereitung des gewünschten Kaffeeheißgetränks durch die Kaffeemaschine zu erzielen, und er muss auch nicht wissen, wie ein bestimmter Zubereitungsparameter gewählt werden muss, um einen besonders geräuscharmen, besonders schnellen oder besonders ökonomischen Betrieb zu realisieren.

Voranstehend erläutertem Erfindungsgedanken folgend dient das erfindungsgemäße Verfahren zum Betreiben einer von einem Benutzer zwischen zumindest vier Betriebsmodi umschaltbar ausgebildeten Kaffeemaschine. Die Kaffeemaschine ist in wenigstens einem Standard-Betriebsmodus betreibbar und auch in diesen umschaltbar, in welchem wenigstens ein den Zubereitungsvorgang des Kaffeeheißgetränks beeinflussender Zubereitungsparameter vom Benutzer der Kaffeemaschine individuell konfigurierbar ist. Mögliche Zubereitungsparameter können beispielsweise eine Brühtemperatur des Brühwassers in der Brühkammer der Kaffeemaschine oder eine Feinheit des im Mahlwerk der Kaffeemaschine erzeugten Kaffeepulvers sein. Besagter Standard-Betriebsmodus ist aus herkömmlichen Kaffeemaschinen bekannt. Ein solcher Standard-Betriebsmodus kann auch in herkömmlichen Kaffeemaschinen bzw. in Betriebsverfahren für herkömmliche Kaffeemaschine vorgesehen sein. Beim erfindungsgemäßen Verfahren ist die Kaffeemaschine in zumindest drei weiteren Betriebsmodi betreibbar und somit in diese umschaltbar. Diese drei Betriebsmodi, die im Folgenden als erster, zweiter und dritter Betriebsmodus bezeichnet werden, sollen im Folgenden diskutiert werden.

Beim erfindungsgemäßen Verfahren wird zumindest ein Mahlwerk der Kaffeemaschine mit gegenüber den anderen Betriebsmodi reduzierter Mahlgeschwindigkeit betrieben, wenn sich die Kaffeemaschine im ersten Betriebsmodus befindet. Verfahrensgemäß wird außerdem zumindest das Mahlwerk so angesteuert, dass die zum Herstellen eines bestimmten Kaffeeheißgetränks erforderliche Zeitdauer gegenüber den anderen Betriebsmodi reduziert ist, wenn sich die Kaffeemaschine im zweiten Betriebsmodus befindet. Ferner wird beim erfindungsgemäßen Verfahren zumindest das Mahlwerk so angesteuert, dass es zum Herstellen eines bestimmten Kaffeeheißgetränks eine gegenüber den anderen Betriebsmodi reduzierte Menge an gemahlenen Kaffeebohnen erzeugt, wenn sich die Kaffeemaschine im dritten Betriebsmodus befindet. Aus vorangehenden Erläuterungen wird deutlich, dass das erfindungsgemäße Verfahren also ausdrücklich nicht auf eine Umschaltbarkeit zwischen den voranstehend erläuterten vier Betriebsmodi beschränkt ist, sondern es können weitere Betriebsmodi vorgesehen sein, in welche die Kaffeemaschine im Betrieb umgeschaltet werden kann.

Bei einer bevorzugten Ausführungsform des erfindungsgemäßen Verfahrens erfolgt im dritten Betriebstand eine Beheizung des der Brühkammer zuzuführenden Brühwasser in der Kaffeemaschine auf eine zumindest gegenüber den anderen beiden Betriebsmodi reduzierte Brühtemperatur. Auf diese Weise kann der Energieverbrauch bei der Zubereitung des Kaffeeheißgetränks merklich gesenkt werden.

Bei einer weiteren anderen bevorzugten Ausführungsform des erfindungsgemäßen Verfahrens werden im zweiten Betriebsmodus eine elektrische Heizeinrichtung der Kaffeemaschine, insbesondere ein Durchlauferhitzer, zum Erhitzen des der Brühkammer zuzuführenden Brühwassers und eine Fördereinrichtung der Kaffeemaschine zum Fördern von Brühwasser in die Brühkammer jeweils in einem Arbeitsbereich mit gegenüber dem Standard-Betriebsmodus erhöhter Leistung betrieben. Dadurch kann der Zubereitungsvorgang beschleunigt und entsprechend die Dauer der Zubereitung des Kaffeeheißgetränks in nicht unerheblichem Maße reduziert werden.

Gemäß einer vorteilhaften Weiterbildung des erfindungsgemäßen Verfahrens werden im dritten Betriebsmodus die elektrische Heizeinrichtung bzw. der Durchlauferhitzer zum Erhitzen des der Brühkammer zuzuführenden Brühwassers und die Fördereinrichtung zum Fördern des Brühwassers jeweils in einem Arbeitsbereich mit gegenüber dem Standard-Betriebsmodus erhöhtem Wirkungsgrad betrieben. Besagter Wirkungsgrad kann dabei betreffend die Heizeinrichtung als Verhältnis von erzeugter Wärme zu verbrauchter elektrischer Energie definiert sein. Entsprechend kann betreffend die Fördereinrichtung der Wirkungsgrad als Verhältnis von bereitgestellter Förderleistung zu verbrauchter elektrischer Energie definiert sein. Mit dem Betrieb von Heizeinrichtung bzw. Durchlauferhitzer und Fördereinrichtung bei jeweils gegenüber dem Standard-Betriebsmodus erhöhtem Wirkungsgrad geht eine besonders ökonomische Zubereitung des Kaffeeheißgetränks einher.

Bei einer bevorzugten Ausführungsform des erfindungsgemäßen Verfahrens wird im ersten Betriebsmodus die Fördereinrichtung mit zumindest gegenüber dem zweiten und dritten Betriebsmodus, vorzugsweise gegenüber allen Betriebsmodi reduzierter Förderleistung betrieben. Auch durch diese Maßnahme wird die Geräuschentwicklung der Fördereinrichtung und somit Kaffeemaschine während der Zubereitung verringert.

Bei einer anderen bevorzugten Ausführungsform wird im ersten Betriebsmodus wenigstens eine verstellbare Ventileinrichtung der Kaffeemaschine mit gegenüber dem zweiten und dritten Betriebsmodus, vorzugsweise gegenüber allen anderen Betriebsmodi, reduzierter Verstellgeschwindigkeit verstellt. Mittels dieser Maßnahme wird die Geräuschentwicklung beim Verstellen der betreffenden Ventileinrichtung und somit der Kaffeemaschine während der Zubereitung des Kaffeeheißgetränks verringert.

Besonders bevorzugt kann im dritten Betriebsmodus das Mahlwerk mit maximal feiner Einstellung betrieben werden. Je feiner Kaffeepulver gemahlen wird, desto größer wird die erzeugte Pulveroberfläche. Je größer wiederum die erzeugte Pulveroberfläche, desto größer die Fläche, auf welcher durch Wasser Kaffeearomen ausgelöst werden. Aus diesem Grund wird bei feinst gemahlenem Pulver die höchste Ausbeute an Kaffeearomen erzielt.

Gemäß einer weiteren vorteilhaften Weiterbildung des erfindungsgemäßen Verfahrens kann die Kaffeemaschine zusätzlich in einen weiteren, vierten Betriebsmodus umgeschaltet werden. In diesem vierten Betriebsmodus wird die Brühkammer mit einer vorbestimmten Brühgeschwindigkeit und die Heizeinrichtung mit einer vorbestimmten Heizleistung, die beide dem zuzubereitenden Kaffeeheißgetränk zugeordnet sind, betrieben. Weiterhin wird im vierten Betriebsmodus das Mahlwerk mit zumindest gegenüber dem zweiten und dritten Betriebsmodus, vorzugsweise mit gegenüber allen Betriebsmodi, reduzierter Mahlgeschwindigkeit betrieben. Besonders bevorzugt kann auch eine Brühgeschwindigkeit gegenüber dem zweiten und dritten Betriebsmodus, vorzugsweise gegenüber allen Betriebsmodi, reduziert sein.

Besonders bevorzugt vorstellbar ist im vierten Betriebszustand die Umsetzung wenigstens einer der folgenden Maßnahmen:
- hergestellt wird im Zuge der Zubereitung eine maximale Menge an Kaffeepulver von 13g mit hohem Feinanteil;
- Vorheizzeiten und Vorwärmflüssigkeiten werden ohne Rücksicht auf erhöhtes Restwasser in der Tropfschale festgelegt;
- eine Vorbrühmenge an vorgebrühtem Brühwasser beträgt zwischen 13 ml und 20 ml;
- eine Brühpause zwischen Vorbrühen und Hauptbrühen beträgt mindestens 3 bis 5 Sekunden.

Besagte Maßnahmen führen einer Qualitätssteigerung des zubereiteten Kaffeeheißgetränks.

Die Erfindung betrifft ferner ein Computerprogrammprodukt, welches durch ein Computersystem auslesbare Anweisungen enthält, derart, dass das Computersystem beim Ausführen des Computerprogrammprodukts das voranstehend vorgestellte, erfindungsgemäße Verfahren ausführt.

Die Erfindung betrifft weiterhin eine Kaffeemaschine, insbesondere einen Kaffeevollautomaten. Die erfindungsgemäße Kaffeemaschine umfasst ein Mahlwerk und eine beheizbare Brühkammer zum Zubereiten eines Kaffeeheißgetränks aus Brühwasser und Kaffeebohnen. Die Brühkammer kann dabei insbesondere dadurch beheizbar sein, dass sie mit erhitztem Brühwasser beaufschlagt wird. Ferner umfasst die Kaffeemaschine eine Steuerungs-/Regelungseinrichtung zum Steuern zumindest des Mahlwerks und der Brühkammer, wobei die Steuerungs-/Regelungseinrichtung zur Durchführung des voranstehend vorgestellten, erfindungsgemäßen Verfahrens eingerichtet bzw. programmiert ist, so dass sich die vorangehend erläuterten Vorteile des erfindungsgemäßen Verfahrens auf die erfindungsgemäße Kaffeemaschine übertragen. Bevorzugt führt die erfindungsgemäße Kaffeemaschine das erfindungsgemäße Verfahren im Betrieb der Kaffeemaschine aus. Dies bedeutet, dass sich die Kaffeemaschine im Standard-Betriebsmodus oder aber im ersten, zweiten oder dritten Betriebsmodus oder in einem anderen Betriebsmodus, insbesondere dem oben erläuterten vierten Betriebsmodus, befindet. Erfindungsgemäß umfasst die erfindungsgemäße Kaffeemaschine eine mit der Steuerungs-/Regelungseinrichtung zusammenwirkende Eingabeeinheit, mittels welcher die Kaffeemaschine durch Benutzereingabe wenigstens zwischen den zumindest vier Betriebsmodi umschaltbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird anhand der nachfolgenden Beschreibung näher erläutert.

Es zeigen, jeweils schematisch:
- Fig. 1: eine stark vereinfachte, grobschematische Darstellung eines Beispiels einer erfindungsgemäßen Kaffeemaschine,
- Fig. 2: ein das erfindungsgemäße Verfahren erläuterndes Diagramm.

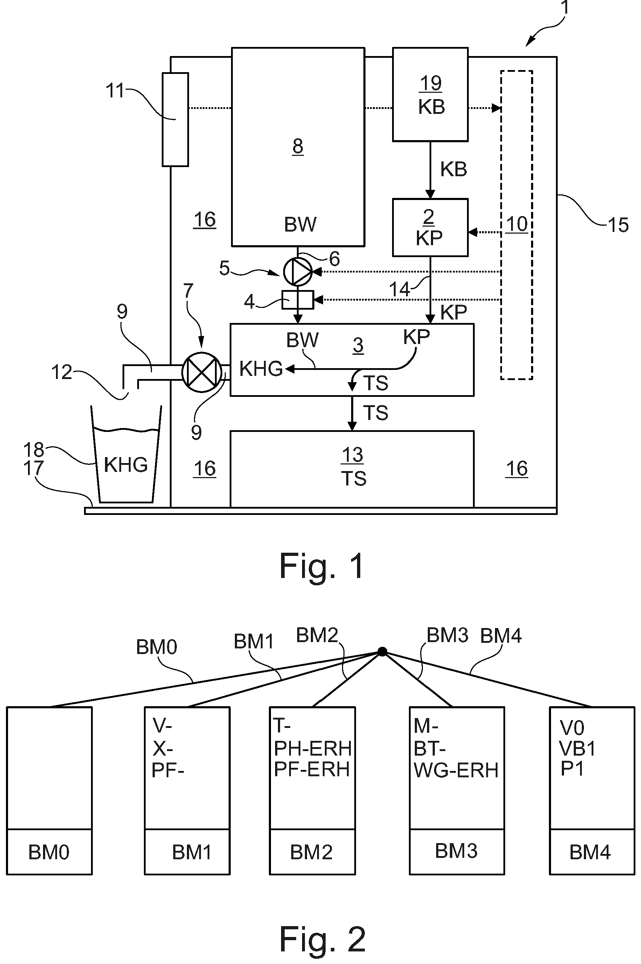

Eine in Figur 1 beispielhaft und grobschematisch dargestellte Kaffeemaschine 1 bereitet im Betrieb ein Kaffeeheißgetränk KHG zu. Die Kaffeemaschine 1 kann hierzu als Kaffeevollautomat ausgebildet sein. Die Kaffeemaschine 1 umfasst ein Gehäuse 15, welches einen Gehäuseinnenraum 16 umgibt. Im Gehäuseinnenraum 16 ist ein Mahlwerk 2 der Kaffeemaschine 1 und eine Brühkammer 3 der Kaffeemaschine 1 zum Zubereiten des Kaffeeheißgetränks KHG aus Brühwasser BW und aus Kaffeebohnen KB angeordnet. Das Mahlwerk 2 kann mit unterschiedlichen Drehzahlen betrieben werden, womit unterschiedliche Mahlgeschwindigkeiten einhergehen, mit welchen aus den dem Mahlwerk 2 zugeführten Kaffeebohnen KB ein Kaffeepulver KP gemahlen wird. Die in das Mahlwerk 2 einzubringenden Kaffeebohnen KB können in einem Bohnenbehältnis 19 bevorratet sein.

Das vom Mahlwerk 2 erzeugte Kaffeepulver KP kann über eine Verbindungsleitung 14 der Brühkammer 3 zugeführt werden.

Die Brühkammer 3 kann einen verstellbaren Kolben (nicht gezeigt) aufweisen, mittels welchem aus einem Wasserbehältnis 8 in die Brühkammer 3 eingebrachtes Brühwasser BW durch aus dem Mahlwerk 2 in die Brühkammer 3 eingebrachtes Kaffeepulver KP gepresst und auf diese Weise das Kaffeeheißgetränk KHG zubereitet wird. Außerdem umfasst die Kaffeemaschine 1 eine der Brühkammer 3 fluidisch vorgeschaltete elektrische Heizeinrichtung 4 zum Erhitzen des in die Brühkammer 3 einzubringenden Brühwassers BW. Die Heizeinrichtung 4 kann durch einen Durchlauferhitzer gebildet sein. Von der Brühkammer 3 führt eine Auslassleitung 9 von innerhalb des Gehäuses 2 zu einem außerhalb des Gehäuses 2 angeordneten Getränkeauslass 12, über welchen das zubereitete Kaffeeheißgetränk KHG in ein auf einer Ablage 17 angeordnetes Gefäß 18 abgegeben werden kann. Der beim Brühvorgang in der Brühkammer 3 anfallende Trester TS kann in einem Tresterbehältnis 13 gesammelt werden.

Die Kaffeemaschine 1 umfasst weiterhin eine Fördereinrichtung 5 zum Fördern von Brühwasser BW aus dem Wasserbehältnis 15 in die Brühkammer 3. Die Fördereinrichtung 5 kann in einer von dem Brühwasser BW durchströmbaren Wasserleitung 6 angeordnet sein, über welche das Wasserbehältnis 15 fluidisch mit der Brühkammer 4 kommuniziert. Des Weiteren umfasst die Kaffeemaschine 1 eine in der Wasserleitung 6 angeordnete, verstellbare und steuerbare Ventileinrichtung 7 zum Einstellen einer Menge an durch den Auslass zu transportierendem Kaffeeheißgetränk KHG.

Die Kaffeemaschine 1 kann weitere Komponenten, etwa ein Behältnis zum Aufnehmen und Verarbeiten von Milch oder dergleichen, umfassen, die in Figur 1 der Übersichtlichkeit halber nicht gezeigt sind.

Ferner umfasst die Kaffeemaschine 1 eine Steuerungs-/Regelungseinrichtung 10 zum Steuern des Mahlwerks 2, zum Steuern der Brühkammer 3 und zum Steuern der Fördereinrichtung 5. Die Kaffeemaschine 1 ist im Beispiel der Figuren 1 zwischen einem ersten, zweiten, dritten und vierten Betriebsmodus BM1, BM2, BM3, BM4 sowie einem Standard-Betriebsmodus BM0 umschaltbar. Dies bedeutet, dass sich die Kaffeemaschine 1 im Betrieb im ersten, zweiten, dritten oder vierten Betriebsmodus BM1, BM2, BM3, BM4 oder im Standard-Betriebsmodus BM0 befindet. In Varianten des Beispiels können weitere Betriebsmodi vorgesehen sein.

Im Standard-Betriebsmodus BM0 ist in wenigstens ein den Zubereitungsvorgang des Kaffeeheißgetränks KHG beeinflussender Zubereitungsparameter vom Benutzer der Kaffeemaschine 1 individuell konfigurierbar. Der Standard-Betriebsmodus BM0 kann auch in herkömmlichen Kaffeemaschinen bzw. in Betriebsverfahren für herkömmliche Kaffeemaschine vorgesehen sein. Beim erfindungsgemäßen Verfahren ist die erfindungsgemäße Kaffeemaschine 1 aber zumindest in den drei weiteren Betriebsmodi BM1, BM2, BM3 betreibbar und somit auch in diese Betriebsmodi BM1, BM2, BM3 betreibbar umschaltbar. Die Kaffeemaschine 1 ist also zwischen den fünf Betriebszuständen BM0 bis BM4 umschaltbar. Diese drei Betriebsmodi BM1, BM2, BM3, die im Folgenden als erster, zweiter und dritter Betriebsmodus BM1, BM2, BM3 bezeichnet werden, werden im Folgenden diskutiert.

Die Kaffeemaschine 1 besitzt eine mit der Steuerungs-/Regelungseinrichtung 10 zusammenwirkende Eingabeeinheit 11, mittels welcher die Kaffeemaschine 1 durch Benutzereingabe, also von einem Benutzer der Kaffeemaschine 1 zwischen den fünf Betriebsmodi BM0, BM1, BM2, BM3, BM4 umgeschaltet werden kann. Zum Umschalten und somit zur Auswahl des gewünschten Betriebsmodus kann vom Benutzer eine mit der Steuerungs-/Regelungseinrichtung 10 signalübertragend gekoppelte Eingabeeinheit 11 außen am Gehäuse 15 vorgesehen sein. Der aktuell eingestellte Betriebsmodus BM0-BM4 kann in einer der Übersichtlichkeit halber nicht näher dargestellten Anzeigeeinheit, die ebenso wie die Eingabeeinheit 11 außen am Gehäuse 15 angeordnet sein kann, angezeigt werden. Die Steuerungs-/Regelungseinrichtung 10 ist zur Durchführung des erfindungsgemäßen Verfahrens eingerichtet bzw. programmiert und führt dieses im Betrieb der Kaffeemaschine 1 auch aus. Das erfindungsgemäße Verfahren bzw. die beim erfindungsgemäßen Verfahren auswählbaren fünf Betriebsmodi BM0, BM1, BM2, BM3, BM4 werden im Folgenden anhand des in Figur 2 gezeigten Diagramms beispielhaft erläutert.

Im Standard-Betriebsmodus BM0 kann vom Benutzer der Kaffeemaschine wenigstens ein den Zubereitungsvorgang des Kaffeeheißgetränks KHG beeinflussender Zubereitungsparameter individuell konfiguriert werden. Denkbar ist also, dass im Standard-Betriebsmodus BM0 auch zwei oder mehr solcher Zubereitungsparameter vom Benutzer jeweils individuell konfiguriert werden können. Mögliche Zubereitungsparameter können beispielsweise eine Brühtemperatur des Brühwassers BW in der Brühkammer 3 oder eine Feinheit des im Mahlwerk 2 erzeugten Kaffeepulvers KP sein. Besagter Standard-Betriebsmodus BM0 ist aus herkömmlichen Kaffeemaschinen bekannt.

Wird die Kaffeemaschine 1 vom Benutzer mittels der Eingabeeinheit 11 in den ersten Betriebsmodus BM1 umgeschaltet, so wird das Mahlwerk 2 im ersten Betriebsmodus BM1 durch entsprechende Ansteuerung durch die Steuerungs-/Regelungseinrichtung 10 mit gegenüber den Betriebsmodi BM2, BM3, BM4, insbesondere auch gegenüber dem Standard-Betriebsmodus BM0, reduzierter Mahlgeschwindigkeit V- betrieben. Hierzu wird das Mahlwerk 2 mit reduzierter Drehzahl aktiviert. Ebenso wird im ersten Betriebsmodus BM1 die Fördereinrichtung 5 mit gegenüber den Betriebsmodi BM2, BM3, BM4 reduzierter Förderleistung PF- betrieben. Im ersten Betriebsmodus BM1 wird die in der Wasserleitung 6 der Kaffeemaschine 1 zum Führen von Brühwasser BW angeordnete Ventileinrichtung 7 mit gegenüber den Betriebsmodi BM2, BM3, BM4, insbesondere auch gegenüber dem Standard-Betriebsmodus BM0, reduzierter Verstellgeschwindigkeit X- verstellt.

Wird die Kaffeemaschine 1 vom Benutzer in den zweiten Betriebsmodus BM2 umgeschaltet, so wird das Mahlwerk 2 in diesem zweiten Betriebsmodus BM2 von der Steuerungs-/Regelungseinrichtung 10 so angesteuert, dass das die zum Herstellen eines bestimmten Kaffeeheißgetränks erforderliche Zeitdauer gegenüber den Betriebsmodi BM1, BM3, BM4, , insbesondere auch gegenüber dem Standard-Betriebsmodus BM0, auf einen kleineren Wert T- reduziert ist, wenn sich die Kaffeemaschine in einem zweiten Betriebsmodus BM2 befindet. Außerdem werden im zweiten Betriebsmodus BM2 die elektrische Heizeinrichtung 4 zum Erhitzen des Brühwassers BW und die Fördereinrichtung 5 zum Fördern von Brühwasser BW in die Brühkammer 3 jeweils mit erhöhter Heizleistung PH-ERH bzw. mit erhöhter Förderleistung PF-ERH betrieben.

Wird die Kaffeemaschine 1 vom Benutzer in den dritten Betriebsmodus BM3 umgeschaltet, so wird das Mahlwerk 2 von der Steuerungs-/Regelungseinrichtung 10 im dritten Betriebsmodus BM3 so angesteuert, dass es zum Herstellen eines bestimmten Kaffeeheißgetränks KHG eine gegenüber den Betriebsmodi BM1, BM2, BM4, insbesondere auch gegenüber dem Standard-Betriebsmodus BM0, reduzierte Menge M- an gemahlenen Kaffeebohnen KB erzeugt. Im dritten Betriebstand BM3 wird die Brühkammer 3 bzw. das in dieser befindliche Brühwasser BW der Kaffeemaschine 1 auf eine gegenüber den Betriebsmodi BM1, BM2, BM4, insbesondere auch gegenüber dem Standard-Betriebsmodus BM0, reduzierte Brühtemperatur BT- erwärmt. Zusätzlich werden im dritten Betriebsmodus BM3 die elektrische Heizeinrichtung 4 und die Fördereinrichtung 5 jeweils mit erhöhtem Wirkungsgrad WG-ERH betrieben. Bevorzugt kann im dritten Betriebsmodus BM3 das Mahlwerk 2 mit maximal feiner Einstellung betrieben werden. Je feiner Kaffeepulver gemahlen wird, desto größer wird die erzeugte Pulveroberfläche. Je größer wiederum die erzeugte Pulveroberfläche, desto größer die Fläche, auf welcher durch Wasser Kaffeearomen ausgelöst werden. Aus diesem Grund wird bei feinst gemahlenem Pulver die höchste Ausbeute an Kaffeearomen erzielt.

In dem vierten Betriebsmodus BM4 wird die Brühkammer 2 mit einer vorbestimmten Brühgeschwindigkeit VB1 und mit einer vorbestimmten Heizleistung P1 betrieben wird. Weiterhin wird im vierten Betriebsmodus BM4 das Mahlwerk 3 mit zumindest gegenüber dem zweiten und dritten Betriebsmodus BM2, BM3, insbesondere auch gegenüber dem Standard-Betriebsmodus BM0, verringerter Mahlgeschwindigkeit V0 betrieben, die jedoch größer sein kann als die im ersten Betriebszustand verwendete reduzierte Mahlgeschwindigkeit V-.

### Bezugszeichenliste

- 1: Kaffeemaschine
- 2: Mahlwerk
- 3: Brühkammer
- 4: Heizeinrichtung
- 5: Fördereinrichtung
- 6: Wasserleitung
- 7: Ventileinrichtung
- 8: Wasserbehältnis
- 9: Auslassleitung
- 10: Steuerungs-/Regelungseinrichtung
- 11: Eingabeeinheit
- 12: Getränkeauslass
- 13: Tresterbehältnis
- 14: Verbindungsleitung
- 15: Gehäuse
- 16: Gehäuseinnenraum
- 17: Ablage
- 18: Gefäß
- 19: Bohnenbehältnis

- KHG: Kaffeeheißgetränk
- BW: Brühwasser
- KB: Kaffeebohnen
- KP: Kaffeepulver
- TS: Trester

- BM0: Standard-Betriebsmodus
- BM1: erster Betriebsmodus
- BM2: zweiter Betriebsmodus
- BM3: dritter Betriebsmodus
- BM4: vierter Betriebsmodus
- V-: reduzierte Mahlgeschwindigkeit
- V0: verringerte Mahlgeschwindigkeit
- X-: reduzierte Verstellgeschwindigkeit
- PF-: reduzierte Förderleistung
- T-: reduzierte Zeitdauer
- M-: reduzierte Menge
- PH-ERH: erhöhte Heizleistung
- PF-ERH: erhöhte Förderleistung
- WG-ERH: erhöhter Wirkungsgrad
- P1: vorbestimmte Heizleistung
- VB1: vorbestimmte Brühgeschwindigkeit

## Patentansprüche

1. Verfahren zum Betreiben einer von einem Benutzer zwischen zumindest drei Betriebsmodi (BM1, BM2, BM3, BM4) umschaltbar ausgebildeten Kaffeemaschine (1) zum Zubereiten eines Kaffeeheißgetränks (KHG),
wobei die Kaffeemaschine (1) in wenigstens einem Standard-Betriebsmodus (BM0) betreibbar ist, in welchem wenigstens ein den Zubereitungsvorgang des Kaffeeheißgetränks (KHG) beeinflussender Zubereitungsparameter vom Benutzer der Kaffeemaschine (1) individuell konfigurierbar ist,
- wobei zumindest ein Mahlwerk (2) der Kaffeemaschine (1) mit gegenüber den anderen Betriebsmodi (BM2, BM3, BM4) reduzierter Mahlgeschwindigkeit (V-) betrieben wird, wenn sich die Kaffeemaschine (1) in einem vom Standard-Betriebsmodus (BM0) verschiedenen ersten Betriebsmodus (BM1) befindet ist,
- gemäß welchem zumindest das Mahlwerk (2) so angesteuert wird, dass die zum Herstellen eines bestimmten Kaffeeheißgetränks erforderliche Zeitdauer (T-) gegenüber den anderen Betriebsmodi (BM1, BM3, BM4) reduziert ist, wenn sich die Kaffeemaschine in einem vom Standard-Betriebsmodus (BM0) verschiedenen zweiten Betriebsmodus (BM2) befindet,
- gemäß welchem zumindest das Mahlwerk (2) so angesteuert wird, dass es zum Herstellen eines bestimmten Kaffeeheißgetränks (KHG) eine gegenüber den anderen Betriebsmodi (BM1, BM2, BM4) reduzierte Menge (M-) an gemahlenen Kaffeebohnen (KB) erzeugt, wenn sich die Kaffeemaschine (1) in einem vom Standard-Betriebsmodus (BM0) verschiedenen dritten Betriebsmodus (BM3) befindet.

2. Verfahren nach Anspruch 1,
**dadurch gekennzeichnet, dass**
im dritten Betriebstand (BM3) eine Beheizung einer beheizbaren Brühkammer (3) der Kaffeemaschine (1) auf eine gegenüber den anderen Betriebsmodi (BM1, BM2, BM4) reduzierte Brühtemperatur (BT-) erfolgt.

3. Verfahren nach Anspruch 1 oder 2,
**dadurch gekennzeichnet, dass**
im zweiten Betriebsmodus (BM2) eine elektrische Heizeinrichtung (4) der Kaffeemaschine (1) zum Erhitzen von der Brühkammer (3) zuzuführenden Brühwassers (BW) und eine Fördereinrichtung (5) der Kaffeemaschine (1) zum Fördern des Brühwassers (BW) in die Brühkammer (3) mit gegenüber dem Standard-Betriebsmodus (BM0) erhöhter Leistung (PH-ERH, PF-ERH) betrieben werden.

4. Verfahren nach einem der Ansprüche 1 bis 3,
**dadurch gekennzeichnet, dass**
im dritten Betriebsmodus (BM3) die elektrische Heizeinrichtung (4) zum Beheizen der Brühkammer (3) und die Fördereinrichtung (5) jeweils mit gegenüber dem Standard-Betriebsmodus (BM0) erhöhtem Wirkungsgrad (WG-ERH) betrieben werden.

5. Verfahren nach einem der vorhergehenden Ansprüche,
**dadurch gekennzeichnet, dass**
im ersten Betriebsmodus (BM1) die Fördereinrichtung (5) mit gegenüber den anderen Betriebsmodi (BM2, BM3, BM4) reduzierter Förderleistung (PF-) betrieben wird.

6. Verfahren nach einem der vorhergehenden Ansprüche,
**dadurch gekennzeichnet, dass**
im ersten Betriebsmodus (BM1) wenigstens eine in einer Wasserleitung (6) der Kaffeemaschine (1) zum Führen von Brühwasser (BW) angeordnete Ventileinrichtung (7) mit gegenüber den anderen Betriebsmodi (BM2, BM3, BM4) reduzierter Verstellgeschwindigkeit (X-) verstellt wird.

7. Verfahren nach einem der vorhergehenden Ansprüche,
**dadurch gekennzeichnet, dass**
im dritten Betriebsmodus (BM3) das Mahlwerk (2) mit maximal feiner Einstellung betrieben wird.

8. Verfahren nach einem der vorhergehenden Ansprüche,
**dadurch gekennzeichnet, dass**,
wenn sich die Kaffeemaschine (1) in einen vierten Betriebsmodus (BM4) befindet:
- die Brühkammer (2) mit einer vorbestimmten Brühgeschwindigkeit (VB1) und mit einer vorbestimmten Heizleistung (P1) betrieben wird; und dass
- das Mahlwerk (3) mit zumindest gegenüber dem zweiten und dritten Betriebsmodus (BM2, BM3) verringerter Mahlgeschwindigkeit (V0) betrieben wird.

9. Computerprogrammprodukt, welches durch ein Computersystem der Steuerungs-/Regelungseinrichtung (10) der Kaffeemaschine (1) nach Anspruch 10 auslesbare Anweisungen enthält, die bewirken, dass die Kaffeemaschine (1) beim Ausführen des Computerprogrammprodukts das Verfahren nach einem der Ansprüche 1 bis 8 ausführt.

10. Kaffeemaschine (1), insbesondere Kaffeevollautomat,
- mit einem Mahlwerk (2) und einer beheizbaren Brühkammer (3) zum Zubereiten eines Kaffeeheißgetränks (KHG) aus Brühwasser (BW) und Kaffeebohnen (KB),
- mit einer Steuerungs-/Regelungseinrichtung (10) zum Steuern zumindest des Mahlwerks (2) und der Brühkammer (3), wobei die Steuerungs-/Regelungseinrichtung (10) zur Durchführung des Verfahrens nach einem der vorhergehenden Ansprüche eingerichtet/programmiert ist und vorzugsweise im Betrieb der Kaffeemaschine (1) dieses Verfahren ausführt,
- mit einer mit der Steuerungs-/Regelungseinrichtung (10) zusammenwirkenden Eingabeeinheit (11), mittels welcher die Kaffeemaschine (1) durch Benutzereingabe wenigsten zwischen den zumindest drei Betriebsmodi umschaltbar ist.

## Claims

1. Method for operating a coffee machine (1) which is configured to be switchable by a user between at least three operating modes (BM1, BM2, BM3, BM4) for preparing a hot coffee beverage (KHG),
wherein the coffee machine (1) can be operated in at least one standard operating mode (BM0) in which at least one preparation parameter influencing the preparation process of the hot coffee beverage (KHG) can be individually configured by the user of the coffee machine (1),
- wherein at least one grinder (2) of the coffee machine (1) is operated at a reduced grinding speed (V-) relative to the other operating modes (BM2, BM3, BM4) when the coffee machine (1) is in a first operating mode (BM1) which is different from the standard operating mode (BM0),
- according to which at least the grinder (2) is controlled such that the time period (T-) required to produce a specific hot coffee beverage is reduced relative to the other operating modes (BM1, BM3, BM4) when the coffee machine is in a second operating mode (BM2) which is different from the standard operating mode (BM0),
- according to which at least the grinder (2) is controlled such that, to produce a specific hot coffee beverage (KHG), it produces a reduced quantity (M-) of ground coffee beans (KB) relative to the other operating modes (BM1, BM2, BM4) when the coffee machine (1) is in a third operating mode (BM3) which is different from the standard operating mode (BM0).

2. Method according to claim 1,
**characterised in that**
in the third operating state (BM3) a heatable brewing chamber (3) of the coffee machine (1) is heated to a reduced brewing temperature (BT-) relative to the other operating modes (BM1, BM2, BM4).

3. Method according to claim 1 or 2,
**characterised in that**
in the second operating mode (BM2) an electrical heating facility (4) of the coffee machine (1) for heating the brewing water (BW) to be supplied by the brewing chamber (3) and a conveying facility (5) of the coffee machine (1) for conveying the brewing water (BW) into the brewing chamber (3) are operated with an increased power (PH-ERH, PF-ERH) relative to the standard operating mode (BM0).

4. Method according to one of claims 1 to 3,
**characterised in that**
in the third operating mode (BM3) the electrical heating facility (4) for heating the brewing chamber (3) and the conveying facility (5) are operated in each case with an increased efficiency (WG-ERH) relative to the standard operating mode (BM0).

5. Method according to one of the preceding claims,
**characterised in that**
in the first operating mode (BM1) the conveying facility (5) is operated at a reduced conveying capacity (PF-) relative to the other operating modes (BM2, BM3, BM4).

6. Method according to one of the preceding claims,
**characterised in that**
in the first operating mode (BM1) at least one valve facility (7), which is arranged in a water line (6) of the coffee machine (1) for conducting brewing water (BW), is adjusted at a reduced adjusting speed (X-) relative to the other operating modes (BM2, BM3, BM4).

7. Method according to one of the preceding claims,
**characterised in that**
in the third operating mode (BM3) the grinder (2) is operated at a maximum fine setting.

8. Method according to one of the preceding claims,
**characterised in that**
when the coffee machine (1) is in a fourth operating mode (BM4):
- the brewing chamber (2) is operated at a predetermined brewing speed (VB1) and at a predetermined heating power (P1); and **in that**
- the grinder (3) is operated at a lower grinding speed (V0) at least relative to the second and third operating mode (BM2, BM3).

9. Computer programme product which contains instructions which can be read by a computer system of the control/regulating facility (10) of the coffee machine (1) according to claim 10 and which cause the coffee machine (1) to execute the method according to one of claims 1 to 8 when executing the computer programme product.

10. Coffee machine (1), in particular fully automatic coffee machine,
- comprising a grinder (2) and a heatable brewing chamber (3) for preparing a hot coffee beverage (KHG) from brewing water (BW) and coffee beans (KB),
- comprising a control/regulating facility (10) for controlling at least the grinder (2) and the brewing chamber (3), wherein the control/regulating facility (10) is designed/programmed to carry out the method according to one of the preceding claims and preferably executes this method during the operation of the coffee machine (1),
- comprising an input unit (11) which cooperates with the control/regulating facility (10) and by means of which the coffee machine (1) can be switched at least between the at least three operating modes by user input.

## Revendications

1. Procédé de fonctionnement d'une machine à café (1) destinée à préparer une boisson chaude au café (KHG) et configurée pour pouvoir être commutée par un utilisateur entre au moins trois modes de fonctionnement (BM1, BM2, BM3, BM4), dans lequel la machine à café (1) est apte à fonctionner dans au moins un mode de fonctionnement standard (BM0) dans lequel au moins un paramètre de préparation influençant le processus de préparation de la boisson chaude au café (KHG) peut être configuré individuellement par l'utilisateur de la machine à café (1),
- dans lequel au moins un moulin (2) de la machine à café (1) est entraîné à une vitesse de broyage réduite (V-) par rapport aux autres modes de fonctionnement (BM2, BM3, BM4) lorsque la machine à café (1) se trouve dans un premier mode de fonctionnement (BM1) différent du mode de fonctionnement standard (BM0),
- selon lequel au moins le moulin (2) est piloté de telle manière que la durée (T-) nécessaire pour préparer une boisson chaude au café déterminée est réduite par rapport aux autres modes de fonctionnement (BM1, BM3, BM4) lorsque la machine à café (1) se trouve dans un deuxième mode de fonctionnement (BM2) différent du mode de fonctionnement standard (BM0), et
- selon lequel au moins le moulin (2) est piloté de manière à moudre, pour préparer une boisson chaude au café (KHG) déterminée, une quantité réduite (M-) de grains de café (KB) par rapport aux autres modes de fonctionnement (BM1, BM2, BM4) lorsque la machine à café (1) se trouve dans un troisième mode de fonctionnement (BM3) différent du mode de fonctionnement standard (BM0).

2. Procédé selon la revendication 1,
**caractérisé en ce que**,
dans le troisième état de fonctionnement (BM3), le chauffage d'une chambre d'infusion chauffable (3) de la machine à café (1) s'effectue à une température d'infusion (BT-) réduite par rapport aux autres modes de fonctionnement (BM1, BM2, BM4).

3. Procédé selon la revendication 1 ou 2,
**caractérisé en ce que**,
dans le deuxième mode de fonctionnement (BM2), un dispositif de chauffage électrique (4) de la machine à café (1) destiné à chauffer l'eau d'infusion (BW) à acheminer à la chambre d'infusion (3) et un dispositif de transport (5) de la machine à café (1) destiné à transporter l'eau d'infusion (BW) dans la chambre d'infusion (3) fonctionnent à une puissance accrue (PH-ERH, PF-ERH) par rapport à celle du mode de fonctionnement standard (BM0).

4. Procédé selon l'une des revendications 1 à 3,
**caractérisé en ce que**,
dans le troisième mode de fonctionnement (BM3), le dispositif de chauffage électrique (4) destiné à chauffer la chambre d'infusion (3) et le dispositif de transport (5) fonctionnent chacun avec un rendement accru (WG-ERH) par rapport au mode de fonctionnement standard (BM0).

5. Procédé selon l'une des revendications précédentes,
**caractérisé en ce que**,
dans le premier mode de fonctionnement (BM1), le dispositif de transport (5) fonctionne à une capacité de transport réduite (PF-) par rapport aux autres modes de fonctionnement (BM2, BM3, BM4).

6. Procédé selon l'une des revendications précédentes,
**caractérisé en ce que**,
dans le premier mode de fonctionnement (BM1), au moins un dispositif de soupape (7) disposé dans un conduit d'eau (6) de la machine à café (1) pour acheminer de l'eau d'infusion (BW) est réglé avec une vitesse de réglage (X-) réduite par rapport aux autres modes de fonctionnement (BM2, BM3, BM4).

7. Procédé selon l'une des revendications précédentes,
**caractérisé en ce que**,
dans le troisième mode de fonctionnement (BM3), le moulin (2) fonctionne avec le réglage de mouture le plus fin.

8. Procédé selon l'une des revendications précédentes,
**caractérisé en ce que**,
lorsque la machine à café (1) se trouve dans un quatrième mode de fonctionnement (BM4) :
- la chambre d'infusion (2) fonctionne à une vitesse d'infusion prédéterminée (VB1) et avec une puissance de chauffage prédéterminée (P1), et
- le moulin (3) est entraîné à une vitesse de broyage (V0) réduite au moins par rapport au deuxième et au troisième modes de fonctionnement (BM2, BM3).

9. Produit de programme informatique, qui contient des instructions lisibles par un système informatique du dispositif de commande / régulation (10) de la machine à café (1) selon la revendication 10, qui lors de l'exécution du produit de programme informatique, amènent la machine à café (1) à mettre en œuvre le procédé selon l'une des revendications 1 à 8.

10. Machine à café (1), notamment une machine à café automatique, comprenant :
- un moulin (2) et une chambre d'infusion chauffable (3) pour préparer une boisson chaude au café (KHG) à partir d'eau d'infusion (BW) et de grains de café (KB),
- un dispositif de commande / régulation (10) destiné à commander au moins le moulin (2) et la chambre d'infusion (3), le dispositif de commande / régulation (10) étant configuré / programmé pour exécuter le procédé selon l'une des revendications précédentes et exécutant de préférence ce procédé pendant le fonctionnement de la machine à café (1), et
- une unité de saisie (11) coopérant avec le dispositif de commande / régulation (10), au moyen de laquelle la machine à café (1) peut être commutée entre les au moins trois modes de fonctionnement par une saisie d'utilisateur.
